(19)

European
Patent
Office

Europäisches
Patentamt

Office européen
des brevets

(11) **EP 2 966 803 A1**

(12) **EUROPEAN PATENT APPLICATION**

(43) Date of publication:
**13.01.2016 Bulletin 2016/02**

(51) Int Cl.:
*H04L 9/08* (2006.01)      *H04L 9/30* (2006.01)

(21) Application number: **14306135.6**

(22) Date of filing: **11.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
  **Palo Alto, CA California 94306 (US)**

• **Ben Hamouda-Guichoux, Fabrice**
  **92220 Bagneux (FR)**
• **Libert, Benoît**
  **69006 LYON (FR)**

(74) Representative: **Browaeys, Jean-Philippe**
**Technicolor**
**1, rue Jeanne d'Arc**
**92443 Issy-les-Moulineaux (FR)**

(54) **Method and device for cryptographic key generation**

(57)      A method and a device (110) for generation of a cryptographic key pair for use in a (generalized) Goldwasser-Micali cryptosystem. The device (110) generates a first prime $p \equiv 1 \pmod{2^k}$, (S10; S20) where $k \geq 1$ is an integer, and a second prime $q \equiv 3 \pmod 4$ (S11) or, if $k \neq 2$, $q \equiv 1 \pmod 4$ (S21); computes (S12; S22) a modulus $N = pq$; picks (S13; S23) an integer $y \in \mathbb{J}_N \setminus \mathbb{QR}_N$, where $\mathbb{J}_N$ is a set of integers whose Jacobi symbol is 1 and $\mathbb{QR}_N$ is a set of quadratic residues; and outputs (S14; S24) a public key $pk = \{N,y,k\}$ and a private key $sk = \{p,k\}$.

Device                    110
I/O 111
Mem.    CPU
113     112
114

$p \equiv 1 \pmod{2^k}, k \geq 1$  S10

$q \equiv 3 \pmod 4$  S11

$N = pq$  S12

$y \in \mathbb{J}_N \setminus \mathbb{QR}_N$  S13

Output public key $pk = \{N, y, k\}$ and private key $sk = \{p, k\}$  S14

Figure 1

EP 2 966 803 A1

**Description**

TECHNICAL FIELD

The present disclosure relates generally to cryptography, and in particular to a cryptosystem based on the Goldwasser-Micali cryptosystem.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The Goldwasser-Micali (GM) cryptosystem is a well-known public key cryptosystem that encrypts one bit of the plaintext at a time; put another way, the message space is $\{0,1\}^k$, with $k = 1$.

At *EUROCRYPT 2013,* Joye and Libert presented a generalized GM cryptosystem in which *k* bits are encrypted at a time, i.e. the message space is $\{0,1\}^k$, with $k \geq 1$ [see Marc Joye and Benoît Libert. Efficient cryptosystems from 2k-th power residue symbols. In T. Johansson and P. Nguyen, editors, Advances in Cryptology - EUROCRYPT 2013, volume 7881 of Lecture Notes in Computer Science, pages 76-92. Springer, 2013.]. As in GM, the generalized scheme uses a composite $N = pq$ where p and q are prime, and $p, q \equiv 1 \pmod{2^k}$. In addition, $y \in \mathbb{J}_N \setminus \mathbb{QR}_N$ and the public key is $pk = \{N, y, k\}$ while the private key is $sk = \{p, k\}$.

Given a plaintext message $m = \sum_{i=0}^{k-1} m_i\, 2^i$ with $m_i \in \{0,1\}$, the corresponding ciphertext c is formed as $c = y^m x^{2^k} \bmod N$ for some random *element* $x \in \mathbb{Z}_N^*$. Plaintext message *m* is then recovered from the ciphertext c as the unique integer in $[0, 2^k[$ satisfying the relation

$$\left[\left(\frac{y}{p}\right)_{2^k}\right]^m \equiv \left(\frac{c}{p}\right)_{2^k} \quad (\mathrm{mods}\, p). \qquad (1)$$

where $\left(\frac{y}{p}\right)_{2^k}$ denotes the $2^k$-th power residue symbol of *y* modulo *p,* defined as $\left(\frac{y}{p}\right)_{2^k} = y^{\frac{p-1}{2^k}} \mathrm{mods}\, p.$ mods *p*. (It is noted that *a* mods *p* represents the absolute smallest residue of *a* modulo *p*, namely, the complete set of absolute smallest residues are: $-(p\text{-}1)/2,...,-1,0,1,...,(p\text{-}1)/2$). Doing so 2nd power residue symbol (i.e., when $k = 1$) boils down to the classical Legendre symbol.) Solving Eq. (1) can be carried out with a variation of the Poligh-Hellman algorithm; see section 3.2 of the previously mentioned article.

The generalized GM cryptosystem as described in the previously mentioned article meets the standard security notion of semantic security under the quadratic residuosity assumption and the squared Jacobi symbol assumption [see the article with the same name by the same authors published in the Cryptology ePrint Archive as Report 2013/435].

In order to facilitate comprehension, the following notation is introduced. As already mentioned, let $N = pq$ be the product of two (odd) primes *p* and *q*. The set of integers whose Jacobi symbol is 1 is denoted by $\mathbb{J}_N$, $\mathbb{J}_N = \{a \in \mathbb{Z}_N^* | \left(\frac{a}{N}\right) = 1\}$; the set of quadratic residues is denoted by $\mathbb{QR}_N$, $\mathbb{QR}_N = \{a \in \mathbb{Z}_N^* | \left(\frac{a}{p}\right) = \left(\frac{a}{q}\right) = 1\}$; and the set of integers whose Jacobi symbol is -1 is denoted by $\bar{\mathbb{J}}_N$, $\bar{\mathbb{J}}_N = \{a \in \mathbb{Z}_N^* | \left(\frac{a}{N}\right) = -1\}$. It is to be noted that $\mathbb{QR}_N$ is a subset of $\mathbb{J}_N$

*Definition 1 (Quadratic Residuosity Assumption).* Let RSAGen be a probabilistic algorithm that, given a security parameter $\kappa$, outputs primes *p* and *q* such that $p, q \equiv 1 \pmod{2^k}$, and their product $N = pq$. The *Quadratic*

*Residuosity (k* - QR) assumption asserts that the function $\boldsymbol{Adv}_{\mathcal{D}}^{k-\mathrm{QR}}(1^{\kappa})$, defined as the distance

$$\left| \Pr\left[\,\mathcal{D}(x,N)=1|x \overset{R}{\leftarrow} \mathbb{QR}_N\right] - \Pr\left[\,\mathcal{D}(x,N)=1|x \overset{R}{\leftarrow} \mathbb{J}_N \setminus \mathbb{QR}_N\right]\right|$$

is negligible for any probabilistic polynomial-time distinguisher D; the probabilities are taken over the experiment of running $(N,p,q) \leftarrow$ RSAGen($1^\kappa$) and choosing at random $x \in \mathbb{QR}_N$ and $x \in \mathbb{J}_N \setminus \mathbb{QR}_N$.

***Definition 2 (Squared Jacobi Symbol Assumption).*** Let RSAGen be a probabilistic algorithm that, given a security parameter $\kappa$, outputs primes $p$ and $q$ such that $p,q \equiv 1 \pmod{2^k}$, and their product $N = pq$. The *Squared Jacobi Symbol (k* - SJS) assumption asserts that the function $\boldsymbol{Adv}_{\mathcal{D}}^{k-\mathrm{SJS}}(1^{\kappa})$, defined as the distance

$$\left| \Pr\left[\,\mathcal{D}(y^2 \bmod N, N)=1|y \overset{R}{\leftarrow} \mathbb{J}_N\right] - \Pr\left[\,\mathcal{D}(y^2 \bmod N, N)=1|y \overset{R}{\leftarrow} \overline{\mathbb{J}}_N\right]\right|$$

is negligible for any probabilistic polynomial-time distinguisher D; the probabilities are taken over the experiment of running $(N,p,q) \leftarrow$ RSAGen ($1^\kappa$) and choosing a random $y \in \mathbb{J}_N$ and $y \in \overline{\mathbb{J}}_N$.

The case $k = 1$ corresponds to the GM cryptosystem which has indistinguishable encryptions (semantic security) *solely* under the standard Quadratic Residuosity assumption.

It is also noted that the generalized GM requires a special prime generation algorithms for the generation of $p$ and $q$ during key generation.

It will therefore be appreciated that it is desirable to provide a generalized GM cryptosystem whose semantic security solely relies on a quadratic residuosity assumption and in which the key generation is simplified.

The present disclosure provides such a generalized GM cryptosystem.

SUMMARY

In a first aspect, the disclosure is directed to a method for generation of a cryptographic key. A device generates a first prime $p \equiv 1 \pmod{2^k}$, where $k \geq 1$ is an integer; generates a second prime $q = 3 \pmod 4$ or $q \equiv 1 \pmod 4$, $q \not\equiv 1 \pmod{2^k}$; computes a modulus $N$ that is a multiple of the product between the first prime $p$ and the second prime $q$; picks an integer $y \in \mathbb{J}_N \setminus \mathbb{QR}_N$, where $\mathbb{J}_N$ is the set of integers whose Jacobi symbol is 1 and $\mathbb{QR}_N$ is the set of quadratic residues; and outputs a public key $pk = \{N,y,k\}$.

In a first embodiment, the device generates a private key $sk = \{p,k\}$. It is advantageous that the device stores the private key $sk$.

In a second embodiment, the public key $pk$ is for use in a cryptosystem in which a message $m \in \mathcal{M}$, where $\mathcal{M} = \{0,1\}^k$, is encrypted by picking a random $x \in \mathbb{Z}_N^*$ and calculating a ciphertext $c = y^m x^{2^k} \bmod N$.

In a second aspect, the invention is directed to a cryptographic device comprising a processing unit configured to: generate a first prime $p \equiv 1 \pmod{2^k}$, where $k \geq 1$ is an integer; generate a second prime $q = 3 \pmod 4$ or $q \equiv 1 \pmod 4$, $q \not\equiv 1 \pmod{2^k}$; compute a modulus $N$ that is a multiple of the product between the first prime $p$ and the second prime $q$; pick an integer $y \in \mathbb{J}_N \setminus \mathbb{QR}_N$, where $\mathbb{J}_N$ is the set of integers whose Jacobi symbol is 1 and $\mathbb{QR}_N$ is the set of quadratic residues; and output a public key $pk = \{N,y,k\}$.

In a first embodiment, the processing unit is further configured to generate a private key $sk = \{p,k\}$. It is advantageous that the processing unit is configured to store the private key $sk$, preferably in a memory or in the processing unit.

In a second embodiment, the processing unit is configured to output the public key via a communication interface. It is advantageous that the processing unit is configured to use a communication protocol to output the public key via the communication interface.

In a third embodiment, the cryptographic device belongs to one of the group of: a mobile device, a communication device, a game device, a set top box, a TV set, a tablet, a laptop and a cryptographic chip.

In a fourth embodiment, the public key *pk* is for use in a cryptosystem in which a message $m \in \mathcal{M}$, where M = $\{0,1\}^k$, is encrypted by picking a random $x \in \mathbb{Z}_N^*$ and calculating a ciphertext ciphertext c = $y^m x^{2^k}$ mod *N*.

In a third aspect, the disclosure is directed to a computer program product storing instructions that, when executed by a processor, perform the method of the first aspect.

BRIEF DESCRIPTION OF DRAWINGS

Preferred features of the present disclosure will now be described, by way of non-limiting example, with reference to the accompanying drawings, in which:

   Figure 1 illustrates a first preferred embodiment; and
   Figure 2 illustrates a second preferred embodiment.

DESCRIPTION OF EMBODIMENTS

It will be shown that, quite surprisingly, a small modification to the key generation procedure of the generalized GM cryptosystem enables its semantic security to rely solely on a quadratic residuosity assumption.

As already mentioned, the generalized GM cryptosystem defines primes *p* and *q* such that *p*, *q* ≡ 1 (mod $2^k$). It is however observed that the decryption process only involves prime *p*.

This observation makes it possible to develop a new proof technique that allows to prove the semantic security when *q* ≡ 3 (mod 4). Remarkably, the new security proof (presented hereafter for completeness) solely assumes the quadratic residuosity assumption for RSA moduli *N* = *pq* where *p* ≡ 1 (mod $2^k$) and *q* ≡ 3 (mod 4).

Furthermore, a close inspection of the security proof offered in the article published in the Cryptology ePrint Archive shows that the very same proof carries on when *q* ≡ 1 (mod 4). The proof crucially requires that the square roots of a square in $\mathbb{Z}_N^*$ all have the same Jacobi symbol. This is readily satisfied when $-1 \in \mathbb{QR}_N$, or equivalently when *p*,*q* ≡ 1 (mod 4).

**Security analysis (q ≡ 3 (mod 4))**

Let *N* = *pq* be the product of two primes *p* and *q* with *p* ≡ 1 (mod $2^k$) for some *k* ≥ 1. Let $\mathbb{J}_N = \{x \mid \left(\frac{x}{N}\right) = 1\}$ and $\mathbb{QR}_N = \{x^2 \mid x \in \mathbb{Z}_N^*\}$. For $0 \le i \le k$, consider the subsets $D_i$ of $\mathbb{J}_N$ given by $D_i = \{y^{2^i} \bmod N \mid y \in \mathbb{J}_N \setminus \mathbb{QR}_N\}$ and define the subgroup of $2^k$-th residues $R_k = \{y^{2^k} \bmod N \mid y \in \mathbb{Z}_N^*\}$.

**Lemma 1.** *Let N = pq be the product of two large primes p and q where p ≡ 1 (mod $2^k$) for some k ≥ 1 and q ≡ 3 (mod 4). Then, for any* $w \in \mathbb{QR}_N$, *letting W: = $w^{2^{i-1}}$ for a given 1 ≤ i ≤ k, gives* $W \in R_k \cup \bigcup_{j=i}^{k-1} D_j$.

*Further, if w is uniform over* $\mathbb{QR}_N$, *then W is uniform over $D_j$ with probability* $\frac{1}{2^{j-i+1}}$ *for i ≤ j ≤ k - 1 and W is uniform over $R_k$ with probability* $\frac{1}{2^{k-i}}$. *Proof.* It is assumed that w is uniform over $\mathbb{QR}_N$.

The case *i* = *k* (which includes the case *k* = 1) yields *W* = $W^{2^{k-1}}$ with w ∈ $\mathbb{QR}_N$. It is then readily verified that *W* is uniform over $R_k$ with probability 1.

It is henceforth supposed that *i* ≤ *k* - 1 and *k* ≥ 2. In particular, this implies *p* ≡ 1 (mod 4) and thus $\left(\frac{-1}{p}\right) = 1$. Denoting by $(\hat{w}_p, \hat{w}_q)$ the CRT representation of a square root $\hat{w}$ of w (i.e., $\hat{w}_p = \hat{w}$ mod p and $\hat{w}_q = $ **w** mod *q*), the four square roots of w modulo *N* are given by $(\pm \hat{w}_p, \pm \hat{w}_q)$. Since $\left(\frac{-1}{q}\right) = -1$, it can be assumed without loss of generality that

$\left(\frac{\widehat{w}_q}{q}\right) = \left(\frac{\widehat{w}_p}{p}\right)$, or equivalently that $\widehat{w} \in \mathbb{J}_N$. If $\widehat{w} \in \mathbb{QR}_N$ the process can be re-iterated, and so on. More generally, $t$ is defined as the largest integer in $\{1,...,k-i\}$ such that $w = w^{2^t}$ for some $\widehat{w} \in \mathbb{J}_N$. It is then possible to write $W = w^{2^{t+i-1}}$ for some $\widehat{w} \in \mathbb{J}_N$. It is worth noting that since $t$ is the *largest* integer in the set $\{1,...,k-i\}$, $\widehat{w} \in \mathbb{QR}_N$ only when $t = k - i$. Defining $j = t + i - 1$ (observe that $i \le j \le k - 1$), gives $W = \widehat{w}^{2^j} \in D_j$ if $\widehat{w} \notin \mathbb{QR}_N$ (i.e., $\widehat{w} \in \mathbb{J}_N \setminus \mathbb{QR}_N$) and $W = \widehat{w}^{2^{k-1}} \in R_k$ if $\widehat{w} \in \mathbb{QR}_N$. The probability that $W \in D_j$ (for $i \le j \le k - 1$) is $\widehat{w} \notin \mathbb{QR}_N] = \frac{1}{2^t} = \frac{1}{2^{j-i+1}}$ and the probability that $W \in R_k$ is $\Pr\left[W \notin \bigcup_{j=i}^{k-1} D_j\right] = 1 - \sum_{j=i}^{k-1} \frac{1}{2^{j-i+1}} = \frac{1}{2^{k-i}}$.

**Theorem 1.** *For RSA moduli $N = pq$ such that $p \equiv 1$ (mod $2^k$) and $q \equiv 3$ (mod 4), the Gap $2^k$-Residuosity assumption (defined in the previously mentioned paper published at EUROCRYPT) holds if the $k$ - QR assumption (see Definition 1) holds. More precisely, for any Probabilistic Polynolial Time (PPT) distinguisher $\mathcal{A}$ against the latter, there exists a $k$ - QR distinguisher B with comparable running time and for which*

$$\mathbf{Adv}_{\mathcal{A}}^{Gap-2^k-Res}(1^\kappa) \le \frac{k+1}{2} \cdot \mathbf{Adv}_{\mathcal{B}}^{k-QR}(1^\kappa).$$

*[Here the $k$ - QR assumption is defined for RSA moduli $N = pq$ such that $p \equiv 1$ (mod $2^k$) and $q \equiv 3$ (mod 4).]*

*Proof.* Let $\mathcal{A}$ be an adversary against Gap - $2^k$ - Res running in time t. Write:

$$\epsilon_i = \Pr\left[\mathcal{A}(x,N) = 1 \middle| x \xleftarrow{R} D_i\right],$$

for $i \in \{0,...,k-1\}$ and

$$\epsilon_k = \Pr\left[\mathcal{A}(x,N) = 1 \middle| x \xleftarrow{R} R_k\right].$$

The advantage of $\mathcal{A}$ against Gap - $2^k$ - Res is:

$$\mathbf{Adv}_{\mathcal{A}}^{Gap-2^k-Res}(1^\kappa) = |\epsilon_0 - \epsilon_k|.$$

First $k$ distinguishers $\mathcal{B}_1, ..., \mathcal{B}_k$ against $k$ - QR are constructed as follows. $B_i$ takes as input an RSA modulus $N = pq$, with $p \equiv 1$ (mod $2^k$) and $q \equiv 3$ (mod 4), and an element $w \in \mathbb{J}_N$. Its task is to decide whether w is uniform over $\mathbb{J}_N \setminus \mathbb{QR}_N$ or uniform over $\mathbb{QR}_N$. To this ends, $B_i$ chooses a random element $z \xleftarrow{R} \mathbb{Z}_N^*$. It then defines x $= z^{2^i} w^{2^{i-1}}$ mod $N$ and feeds $\mathcal{A}$ with $(x,N)$.

- If w is uniform over $\mathbb{J}_N \setminus \mathbb{QR}_N$, $x$ is clearly uniform over $D_{i-1}$. Therefore, in that case, B outputs 1 with probability $\varepsilon_{i-1}$.

- If w is uniform over $\mathbb{QR}_N$, B outputs 1 with probability $\sum_{j=i}^{k} \frac{1}{2^{j-i+1}} \epsilon_j + \frac{1}{2^{k-i}} \epsilon_k$ according to Lemma 1.

Therefore, the (signed) advantage of $B_i$ in solving $k$ - QR is

$$a_i = \epsilon_{i-1} - \left( \sum_{j=i}^{k} \frac{1}{2^{j-i+1}} \epsilon_j + \frac{1}{2^{k-i}} \epsilon_k \right) = \epsilon_{i-1} - \sum_{j=i}^{k} 2^{i-1} \beta_j \epsilon_j$$

with $\beta_j = \frac{1}{2^j}$ for $j \in \{1, \dots, k-1\}$ and $\beta_k = \frac{1}{2^{k-1}}$.

The following probability distribution $\mathcal{P}$ over $\{1, ...,k\}$ is considered:

$$\Pr_{\substack{R \\ X \leftarrow \mathcal{P}}} (X = i) = p_i = \begin{cases} \dfrac{2}{k+1} & \text{if } i = 1 \\[2mm] \dfrac{1}{k+1} & \text{if } i \geq 2 \end{cases}.$$

An adversary $\mathcal{B}$ against $k$ - QR is defined as follows: $B$ chooses a random $i \overset{R}{\leftarrow} \mathcal{P}$ and feeds $\mathcal{B}_i$ with its $k$ - QR challenge. The advantage of $B$ is:

$$Adv_{\mathcal{B}}^{k-\text{QR}}(1^\kappa) = \left| \sum_{i=1}^{k} p_i\, a_i \right|$$

$$= \left| \sum_{i=1}^{k} p_i\, \epsilon_{i-1} - \sum_{i=1}^{k} p_i \sum_{j=i}^{k} 2^{i-1} \beta_j \epsilon_j \right|$$

$$= \left| \sum_{j=0}^{k-1} p_{j+1}\, \epsilon_j - \sum_{j=1}^{k} \sum_{i=1}^{j} 2^{i-1} p_i \beta_j \epsilon_j \right|$$

$$= \left| p_1 \epsilon_0 + \sum_{j=1}^{k-1} \left( p_{j+1} - \sum_{i=1}^{j} 2^{i-1} p_i \beta_j \right) \epsilon_j - \sum_{i=1}^{k} 2^{i-1} p_i \beta_k \epsilon_k \right|.$$

For $j \in \{1, \dots, k-1\}$, $\beta_j = \frac{1}{2^j}$ and:

$$\sum_{i=1}^{j} 2^{i-1} p_i \beta_j = \sum_{i=1}^{j} 2^{i-j-1} p_i = 2^{-j} p_1 + \sum_{i=2}^{j} 2^{i-j-1} p_j$$

$$= 2^{1-j} \frac{1}{k+1} \left( 1 + \sum_{i=2}^{j} 2^{i-2} \right) = 2^{1-j} \frac{1}{k+1} 2^{j-1} = \frac{1}{k+1} = p_{j+1}.$$

In addition:

$$\sum_{i=1}^{k} 2^{i-1} p_i \beta_k = \sum_{i=1}^{k} 2^{i-k} p_i = \frac{1}{k+1}\left(2^{2-k} + \sum_{i=2}^{k} 2^{i-k}\right) = 2^{2-k}\frac{1}{k+1}\left(1 + \sum_{i=2}^{k} 2^{i-2}\right)$$

$$= \frac{2}{k+1}.$$

Therefore, the advantage of $B$ is

$$\mathbf{Adv}_{\mathcal{B}}^{k-\mathrm{QR}}(1^\kappa) = \left| \frac{2}{k+1}\epsilon_0 + 0 - \frac{2}{k+1}\epsilon_k \right| = \frac{2}{k+1}\mathbf{Adv}_{\mathcal{A}}^{\mathrm{Gap}-2^k-\mathrm{Res}}(1^\kappa),$$

which concludes the proof. □

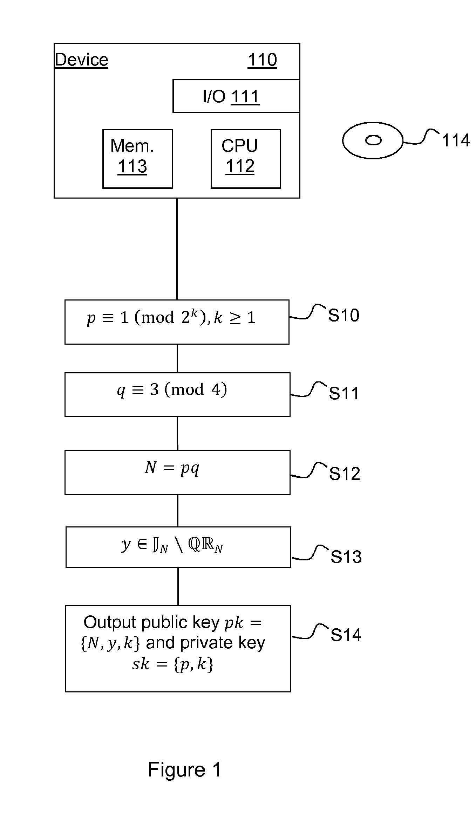

Figure 1 illustrates a first embodiment in which $q \equiv 3 \pmod 4$.

Figure 1 shows a cryptographic device 110 comprising an interface 111 configured for communication with other devices (not shown), at least one hardware processing unit ("CPU") 112 and memory 113. The cryptographic device also comprises other necessary hardware and software components such as internal connections, but these are not shown to simplify the illustration. Also shown is a non-transitory computer program storage medium 114 that stores instruction that, when executed by a processing unit, perform the key generation method KeyGen of the first embodiment.

In more detail, the proposed encryption scheme of the preferred embodiment is the tuple (KeyGen , Encrypt, Decrypt) defined as follows:

KeyGen($1^\kappa$) Given a security parameter $\kappa$, KeyGen defines an integer $k \geq 1$, randomly generates primes $p \equiv 1 \pmod{2^k}$, step S10, and $q \equiv 3 \pmod 4$, step S11, and sets, step S12, $N = pq$. It also picks, step S13, $y \in \mathbb{J}_N \setminus \mathbb{QR}_N$. The public key $pk = \{N, y, k\}$ and the private key $sk = \{p, k\}$ are output, step S14.

Encrypt($pk, m$) Let $\mathcal{M} = \{0,1\}^k$. To encrypt a message $m \in \mathcal{M}$ (seen as an integer in $\{0,...,2^k - 1\}$), Encrypt picks a random $x \in \mathbb{Z}_N^*$ and returns the ciphertext $c = y^m x^{2^k} \bmod N$.

Decrypt($sk, c$) Given $c \in \mathbb{Z}_N^*$ and the private *key* $sk = \{p, k\}$, the algorithm first computes $z = \left(\frac{c}{p}\right)_{2^k}$ and then finds $m \in \{0,...,2^{k-1}\}$ such that the relation

$$\left[\left(\frac{y}{p}\right)_{2^k}\right]^m = z \pmod{s} p$$

holds.

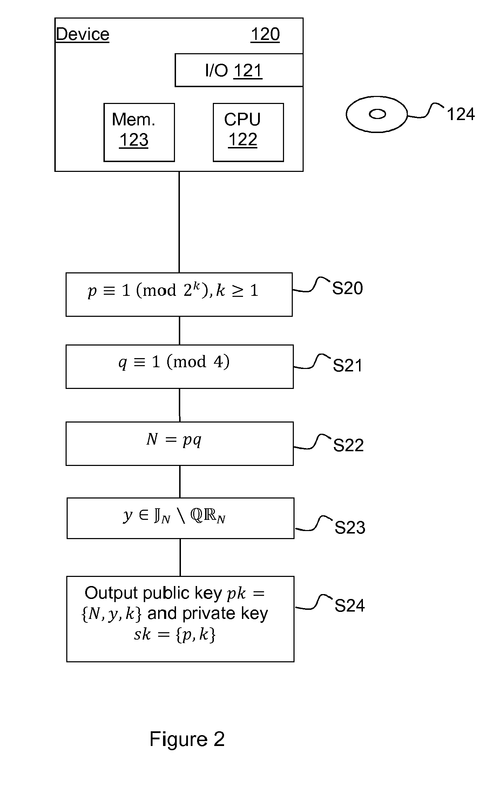

Figure 2 illustrates a second embodiment in which $q \equiv 1 \pmod 4$ for any $k \neq 2$. It is noted that the case where $k = 2$ corresponds to the prior art Generalized GM.

Figure 2 shows a cryptographic device 120 comprising an interface 121 configured for communication with other devices (not shown), at least one hardware processing unit ("CPU") 122 and memory 123. The cryptographic device also comprises other necessary hardware and software components such as internal connections, but these are not shown to simplify the illustration. Also shown is a non-transitory computer program storage medium 124 that stores instruction that, when executed by a processing unit, perform the key generation method KeyGen of the first embodiment.

In more detail, the proposed encryption scheme of the second preferred embodiment is the tuple (KeyGen , Encrypt, Decrypt) defined as follows:

KeyGen($1^\kappa$) Given a security parameter $\kappa$, KeyGen defines an integer $k \geq 1, k \neq 2$, randomly generates primes $p \equiv 1 \pmod{2^k}$, step S20, and $q \equiv 1 \pmod 4$, step S21, and sets $N = pq$; step S22. It also picks $y \in \mathbb{J}_N \setminus \mathbb{QR}_N$,

step S23. The public key *pk* = {*N,y,k*} and the private key *sk* = {*p,k*} are output, step S24.

Encrypt(*pk,m*) Let $\mathcal{M} = \{0,1\}^k$. To encrypt a message $m \in \mathcal{M}$ (seen as an integer in {0,...,$2^k$-1}), Encrypt picks a *random* $x \in \mathbb{Z}_N^*$ and returns the ciphertext $c = y^m x^{2^k} \bmod N$.

Decrypt(*sk,c*) Given $c \in \mathbb{Z}_N^*$ and the private *key sk* = {*p,k*}, the algorithm first computes $z = \left(\dfrac{c}{p}\right)_{2^k}$ and then finds $m \in \{0,...,2^k - 1\}$ such that the relation

$$\left[\left(\frac{y}{p}\right)_{2^k}\right]^m = z \quad (\mathrm{mods}\; p)$$

holds.

In a variant, the modulus *N* is equal to a integer multiple of the product of the primes *p, q*.

According to specific embodiments, the interface 111, 121 is can be a wireline interface (for example a bus interface such as USB (Universal Serial Bus)) or a wireless interface (such as a IEEE 802.11 interface, WiFi® or a Bluetooth® interface); the interface can be a wide area network interface, a local area network interface or a HDMI (High Definition Multimedia Interface) interface.

According to different embodiments, the cryptographic device 110, 120 uses a communication protocol such as HTTP, IP, or FLUTE to transmit the public key.

According to different embodiments, the cryptographic device 110, 120 stores the private key in a memory, such as a random access memory (RAM) or in the processing unit 112, 122.

According to different embodiments, the cryptographic device 110, 120 belongs to a set comprising:

- a mobile device;
- a communication device;
- a game device;
- a set top box;
- a TV set;
- a tablet (or tablet computer);
- a laptop; and
- a cryptographic chip.

A advantage of the first preferred embodiment, i.e., when $q \equiv 3 \pmod 4$ is security. The notion of semantic security is already met under a quadratic residuosity assumption. In particular, the squared Jacobi symbol assumption is not necessary.

A second advantage of the first preferred embodiment (and also the second, i.e., when $q \equiv 1 \pmod 4$) is a simplified key generation process. Only prime p requires a specialized prime generation algorithm as the one described by Joye and Paillier [see Marc Joye and Pascal Paillier. Fast generation of prime numbers on portable devices: An update. In L. Goubin and M. Matsui, editors, Cryptographic Hardware and Embedded Systems - CHES 2006, volume 4249 of Lecture Notes in Computer Science, pages 160-173. Springer, 2006]. It is noted that a random (form-free) prime *p* is congruent to 3 (mod 4) with a probability of $\dfrac{1}{2}$ (it is congruent to 1 (mod 4) otherwise). Form-free primes are much easier to generate than other primes.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method for generation of a cryptographic key comprising, in a device (110; 120):

- generating (S10; S20) a first prime $p \equiv 1 \pmod{2^k}$, where $k \geq 1$ is an integer;
- generating a second prime $q \equiv 3 \pmod{4}$ (S11) or $q \equiv 1 \pmod{4}$, $q \not\equiv 1 \pmod{2^k}$ (S21);
- computing (S12; S22) a modulus $N$ that is a multiple of the product between the first prime p and the second prime $q$;

- picking (S13; S23) an integer $y \in \mathbb{J}_N \setminus \mathbb{QR}_N$, where $\mathbb{J}_N$ is the set of integers whose Jacobi symbol is 1 and $\mathbb{QR}_N$ is the set of quadratic residues; and
- outputting (S14; S24) a public key $pk = \{N, y, k\}$.

2. The method of claim 1, further comprising generating a private key $sk = \{p, k\}$.

3. The method of claim 2, further comprising storing the private key $sk$.

4. The method of claim 1, wherein the public key $pk$ is for use in a cryptosystem in which a message $m \in \mathcal{M}$, where $\mathcal{M} = \{0,1\}^k$, is encrypted by picking a random $x \in \mathbb{Z}_N^*$ and calculating a ciphertext ciphertext $c = y^m x^{2k} \bmod N$.

5. A cryptographic device (110; 120) comprising a processing unit (112; 122) configured to:

- generate a first prime $p \equiv 1 \pmod{2^k}$, where $k \geq 1$ is an integer;
- generate a second prime $q \equiv 3 \pmod{4}$ or $q \equiv 1 \pmod{4}$, $q \not\equiv 1 \pmod{2^k}$;
- compute a modulus $N$ that is a multiple of the product between the first prime p and the second prime $q$;

- pick an integer $y \in \mathbb{J}_N \setminus \mathbb{QR}_N$, where $\mathbb{J}_N$ is the set of integers whose Jacobi symbol is 1 and $\mathbb{QR}_N$ is the set of quadratic residues; and
- output a public key $pk = \{N, y, k\}$.

6. The cryptographic device of claim 5, wherein the processing unit (112; 122) is further configured to generate a private key $sk = \{p, k\}$.

7. The cryptographic device of claim 6, wherein the processing unit is configured to store the private key $sk$.

8. The cryptographic device of claim 7, wherein the processing unit is configured to store the private key $sk$ in a memory (113, 123) or in the processing unit.

9. The cryptographic device of claim 5, wherein the processing unit is configured to output the public key via a communication interface (111, 121).

10. The cryptographic device of claim 9, wherein the processing unit is configured to use a communication protocol to output the public key via the communication interface (111, 121).

11. The cryptographic device of claim 5, wherein the cryptographic device belongs to one of the group of: a mobile device, a communication device, a game device, a set top box, a TV set, a tablet, a laptop and a cryptographic chip.

12. The cryptographic device of claim 5, wherein the public key $pk$ is for use in a cryptosystem in which a message $m \in \mathcal{M}$, where $\mathcal{M} = \{0,1\}^k$, is encrypted by picking a random $x \in \mathbb{Z}_N^*$ and calculating a ciphertext ciphertext $c = y^m x^{2k} \bmod N$.

13. A non-transitory computer program product (114; 124) storing instructions that, when executed by a processor, perform the method of claim 1.

Device               <u>110</u>

> I/O <u>111</u>
>
> Mem. <u>113</u>      CPU <u>112</u>

$\sim$114

$$p \equiv 1 \ (\mathrm{mod} \ 2^k), k \geq 1$$

S10

$$q \equiv 3 \ (\mathrm{mod} \ 4)$$

S11

$$N = pq$$

S12

$$y \in \mathbb{J}_N \setminus \mathbb{QR}_N$$

S13

Output public key $pk = \{N, y, k\}$ and private key $sk = \{p, k\}$

S14

Figure 1

Device                          120

I/O 121

Mem.        CPU
123          122

○ ◯ 124

$$p \equiv 1 \pmod{2^k}, k \geq 1$$  S20

$$q \equiv 1 \pmod 4$$  S21

$$N = pq$$  S22

$$y \in \mathbb{J}_N \setminus \mathbb{QR}_N$$  S23

Output public key $pk = \{N, y, k\}$ and private key $sk = \{p, k\}$  S24

Figure 2

Europäisches
Patentamt

European
Patent Office

Office européen
des brevets

## EUROPEAN SEARCH REPORT

Application Number

EP 14 30 6135

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CLIFFORD COCKS: "An Identity Based Encryption Scheme Based on Quadratic Residues", LECTURE NOTES IN COMPUTER SCIENCE/COMPUTATIONAL SCIENCE > (EUROCRYPT)CHES 2008 (LNCS), SPRINGER VERLAG, DE, vol. 2260, 17 December 2001 (2001-12-17), pages 360-363, XP002267993, ISBN: 978-3-540-24128-7 * sections 2 and 3 * | 1-3, 5-11,13 | INV. H04L9/08 H04L9/30 |
| X | ZHENFU CAO ET AL: "More Efficient Cryptosystems From k<t>h-Power Residues", INTERNATIONAL ASSOCIATION FOR CRYPTOLOGIC RESEARCH,, vol. 20130924:151251, 24 September 2013 (2013-09-24), pages 1-22, XP061008184, [retrieved on 2013-09-24] * sections 3.1 and 3.2 * | 1-13 | |
| T | EP 2 625 818 A1 (THOMSON LICENSING [FR]) 14 August 2013 (2013-08-14) * the whole document * | 4,12 | TECHNICAL FIELDS SEARCHED (IPC) H04L |

The present search report has been drawn up for all claims

| Place of search | Date of completion of the search | Examiner |
|---|---|---|
| Munich | 12 January 2015 | Billet, Olivier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 14 30 6135

This annex lists the patent family members relating to the patent documents cited in  the above-mentioned European search report.
The members are as contained in the European Patent Office EDP file on
The European Patent Office is in no way liable for these particulars which are merely given for the purpose of information.

12-01-2015

| Patent document cited in search report | | Publication date | Patent family member(s) | | Publication date |
|---|---|---|---|---|---|
| EP 2625818 | A1 | 14-08-2013 | EP<br>US<br>WO | 2625818 A1<br>2013195267 A1<br>2012045628 A1 | 14-08-2013<br>01-08-2013<br>12-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Efficient cryptosystems from 2k-th power residue symbols. **MARC JOYE ; BENOÎT LIBERT.** Advances in Cryptology - EUROCRYPT 2013. Springer, 2013, vol. 7881, 76-92

- Fast generation of prime numbers on portable devices: An update. **MARC JOYE ; PASCAL PAILLIER.** Cryptographic Hardware and Embedded Systems - CHES 2006. Springer, 2006, vol. 4249, 160-173